# EUROPÄISCHE PATENTSCHRIFT

(11) **EP 3 632 759 B1**
(45) Veröffentlichungstag und Bekanntmachung des Hinweises auf die Patenterteilung: **12.04.2023**
(21) Anmeldenummer: 18198830.4
(22) Anmeldetag: 05.10.2018
(51) Int. Cl.: B60T 17/22, F16D 66/00, F16D 121/22

(54) **ÜBERWACHUNG DES BETRIEBSZUSTANDES EINER ELEKTROMAGNETISCHEN FEDERDRUCKBREMSE**
MONITORING OF THE OPERATIONAL STATUS OF AN ELECTROMAGNETIC SPRING PRESSURE BRAKE
SURVEILLANCE D'ÉTAT DE FONCTIONNEMENT D'UN FREIN À PRESSION PAR RESSORT ÉLECTROMAGNÉTIQUE

(43) Veröffentlichungstag der Anmeldung: 08.04.2020
(73) Patentinhaber: Chr. Mayr GmbH + Co. KG, 87665 Mauerstetten (DE)
(72) Erfinder: Heumoos, Harald, 87463 Dietmannsried (DE); Kramkowski, Matthias, 86989 Steingaden (DE); Marten, Andreas, 87650 Baisweil (DE); Timmler, Frank, 86879 Wiedergeltingen (DE); Unsin, Karl, 86860 Beckstetten (DE)
(74) Vertreter: Ruschke, Hans Edvard

(56) Entgegenhaltungen:
- EP-A1- 1 462 673
- WO-A1-2009/024168
- CN-A- 108 167 356
- DE-A1- 10 149 604

## Beschreibung

Die vorliegende Erfindung betrifft ein Verfahren zur Überwachung des Betriebszustands einer elektromagnetischen Federdruckbremse.

Derartige Verfahren werden vorzugsweise im Bereich der Aufzugs-, Bühnen- und Hebetechnik verwendet.

Die DE 101 49 604 A1 offenbart ein Verfahren und eine Vorrichtung zum Überwachen des Bremszustandes bei elektromagnetisch betätigten Bremsen. Es soll eine größere Sicherheit bei der Ermittlung des Betriebszustandes der Bremse bei gleichzeitiger universeller Einsetzbarkeit und ohne zusätzlichen konstruktiven Aufwand bei der Bremse erreicht werden. Diese Ziele werden dadurch erreicht, dass die zeitliche Ableitung der Spannung und/oder des Stroms aus der Spule der Bremse ausgewertet und mindestens ein den Betriebszustand der Bremse repräsentierendes Zustandssignal in Abhängigkeit vom Verlauf der zeitlichen Ableitung von Spulenspannung und/oder Spulenstrom ausgegeben wird.

Die EP 735 292 A2 offenbart ein Verfahren zum Betrieb einer elektromagnetisch lüftbaren Federkraftbremse bei sanften Bremseinsatz. Eine solche Federkraftbremse hat einen Bremsrotor, der zwischen einem gestellfesten Widerlager und einer (von zumindest einer Druckfeder beaufschlagten) Ankerscheibe angeordnet ist. Entgegen der Kraft der Druckfeder ist die Ankerscheibe vom Bremsrotor weg zu einem Magnetteil hin über einen Luftspalt hinweg anziehbar, dessen Erregerstrom von einem höheren Lösestrom auf einen geringeren Haltestrom bei anliegender Ankerscheibe vermindert wird. Der Haltestrom wird beim Bremseinsatz kurzzeitig verringert oder unterbrochen und nach dem Abfall der Ankerscheibe zum Bremsrotor hin entsprechend den Bremsbedingungen eingestellt. Um Einflüsse aufgrund einer Luftspaltänderung oder von Schwankungen der Speisespannung zu eliminieren, wird mit dem Aufschalten der Erregerspannung für den Lüftvorgang in der Erregerstromkurve eine Sprungstelle ermittelt und nach deren Stromwert werden die Werte des Lösestroms und des Teilstroms nachfolgender Arbeitsspiele bestimmt.

Die WO 2009/024268 offenbart eine Vorrichtung zum Überwachen einer elektromagnetischen Bremse, die eine Bremsüberwachungseinrichtung umfasst, die dazu ausgelegt ist an eine elektrische Versorgung für eine elektromagnetische Bremse mit Bremseinrichtung gekoppelt zu sein. Außerdem umfasst diese Vorrichtung eine elektrische Spule mit sich ändernder Induktivität (L). Die Bremsüberwachungseinrichtung ist so konfiguriert, dass der Verlauf eines elektrischen Stroms (J), der der elektromagnetischen Bremse zum Betätigen der Bremseinrichtung zugeführt wird, mit der Zeit überwacht wird und eine Bewegung oder einen Status der Unterbrechungseinrichtung unter Verwendung des überwachten Verlaufs des elektrischen Stroms (J) erfasst.

Die EP 1 462 673 A1 offenbart ein Verfahren zur Überwachung einer elektromagnetisch betätigten Bremse, die eine Spule aufweist, die ein Magnetfeld erzeugt, durch das eine Ankerplatte bewegt wird. Aus der zeitlichen Änderung des Spulenstroms wird ein Aktivierungspunkt bestimmt, der für den Bewegungsbeginn der Ankerplatte repräsentativ ist. Der Spulenstrom für den Aktivierungspunkt wird mit einem vorbestimmten ersten Schwellenwert verglichen, der für einen vorbestimmten ersten geschlossenen Zustand der Bremse repräsentativ ist. Abhängig von der Ausgabe dieses Vergleichs wird ein Signal erzeugt, das für den tatsächlichen geschlossenen Zustand der Bremse repräsentativ ist.

Die CN 108 167 356 A offenbart eine Zustandserfassungsschaltung und ein Zustandserfassungsverfahren einer elektromagnetischen Bremse. Die elektromagnetische Bremse umfasst eine Spule; die Zustandserfassungsschaltung umfasst eine Erfassungseinheit und einen Prozessor, wobei die Erfassungseinheit elektrisch mit der Spule verbunden ist und das elektrische Signal der Spule erfasst. Ein Prozessor bestimmt den Arbeitszustand der elektromagnetischen Bremse basierend auf dem elektrischen Signal. Gemäß der vorliegenden Offenbarung wird das elektrische Signal der Spule direkt erfasst, der Arbeitszustand der elektromagnetischen Bremse wird bestimmt und die interne Struktur der elektromagnetischen Bremse muss nicht neu entworfen werden. Gemäß der Zustandserfassungsschaltung und dem Zustandserfassungsverfahren wird der Arbeitszustand der elektromagnetischen Bremse durch mindestens einen der Amplitudenwerte des elektrischen Signals und des Tastverhältnisses eines PWM-Signals und den abnormalen Zustand der elektromagnetischen Bremse bestimmt.

Die Aufgabenstellung der vorliegenden Erfindung wird demgegenüber darin gesehen, einen durch ein Ansteuerungsmodul vorgebebenen Betriebszustand mindestens einer elektromagnetischen Federdruckbremse zu überwachen, und zwar mit einem alternativen Verfahren mit größerer Sensitivität für die Bewegung der Ankerscheibe.

Die Aufgabe wird erfindungsgemäß gelöst, indem zur Überwachung eines vorgegebenen Betriebszustandes der elektromagnetischen Federdruckbremse das Überwachungsmodul mit Hilfe des im Überwachungsmodul enthaltenen Strommessgeräts und / oder Spannungsmessgeräts die an der Federdruckbremse abfallenden Zustandsgrößen Strom (I) und / oder Spannung (U) misst. Aus der gemessenen Zustandsgröße oder aus einer aus der gemessenen Zustandsgröße hergeleiteten Größe wird in Verbindung mit dem Widerstand der Spule der Federdruckbremse eine weitere Zustandsgröße berechnet. Diese weitere Zustandsgröße kann insbesondere die Änderung der Induktivität sein. Im Anschluss daran vergleicht das Überwachungsmodul die weitere Zustandsgröße mit einem vordefinierten Wert/ Verlauf dieser weiteren Zustandsgröße. Der vordefinierte Wert/ Verlauf ist für den vom Ansteuerungsmodul vorgegebenen Betriebszustand im Überwachungsmodul hinterlegt. In Abhängigkeit vom Ergebnis des Vergleichs von dem vordefinierten Wert und der weiteren Zustandsgröße gibt das Überwachungsmodul ein Zustandssignal aus. Hierbei kann die zur Berechnung verwendete hergeleitete Größe, die aus der gemessenen Zustandsgröße hergeleitet wurde, insbesondere der synchronisierte gleitende Mittelwert der gemessenen Zustandsgröße Strom (I) und / oder Spannung (U) sein oder andere geeignete Filterverfahren höherer Ordnung. Diese Überwachung ist für die Ansteuerung der Federdruckbremse mit einer Gleichspannung oder pulsierenden Gleichspannung vorgesehen.

Ein Vorteil der Erfindung gegenüber dem Stand der Technik ist, dass ein Verschleißmonitor der elektromagnetischen Federdruckbremse möglich ist, sodass aus dem Vergleich der Zustandsgrößen mit einer modellbasierten Beschreibung ein Rückschluss auf den Verschleißzustand der mindestens einen elektromagnetischen Federdruckbremse möglich ist. Beispielsweise ist ein Windungsschluss erkennbar, da der dann entstehende zu hohe Strom durch einen Vergleich mit der modellbasierten Beschreibung als Verschleißergebnis erkennbar ist.

Darüber hinaus können im Dauerbetrieb einer Federdruckbremse weitere sich abzeichnende kritische Betriebszustände erkannt werden, wie das Erhitzen einer Federdruckbremse, Spannungsschwankungen, Spannungseinbrüche oder ein Betrieb in Spannungsabsenkung und damit einhergehende Veränderungen im Verlauf der Zustandsgrößen Strom und Spannungen.

Vorteilhaft an der vorliegenden Erfindung ist weiterhin der Betrieb der mindestens einen elektromagnetischen Federdruckbremse als sensorlose Vorrichtung. Durch den Vergleich der gemessenen Zustandsgrößen oder der daraus hergeleiteten Größen mit der modellbasierten Beschreibung wirkt die elektromagnetische Federdruckbremse selbst als Sensor.

Des Weiteren ist von Vorteil, dass ein stetiger Informationsfluss zwischen der Federdruckbremse und einer internen oder externen Ansteuerung der Federdruckbremsen möglich ist.

Ein weiterer Vorteil der vorliegenden Erfindung im Vergleich zum Stand der Technik ergibt sich dadurch, dass bei gedämpften Federdruckbremsen, insbesondere bei durch mechanische Dämpfer gedämpften Federdruckbremsen, bei einem Vergleich der modellbasierten Parameter mit den tatsächlich gemessenen Eingangsparametern die Detektion der Ankerscheibenbewegung sensitiver ist. Hierbei ist insbesondere vorteilhaft, dass die Erkennung des Lüftvorgangs der Ankerscheibe aus dem Verlauf der Anderung der Induktivität gegenüber der Erkennung aus der Stromkennlinie sensitiver ist. Die Bewegung der Ankerscheibe ist auch dann noch auflösbar, wenn die Bewegung der Ankerscheibe in der Stromkennlinie nicht mehr erkennbar ist. Es ist somit unter anderem möglich die Bewegung der Ankerscheibe in gedämpften Bremsen zu detektieren.

Mit den bisherigen Verfahren aus dem Stand der Technik ist der Betriebszustand von gedämpften Bremsen aufgrund der langsamen Bewegung der Ankerscheibe und der damit einhergehenden langsamen Änderung der Stromkennlinie nicht bestimmbar.

Weitere vorteilhafte Details der Erfindung ergeben sich aus den Unteransprüchen sowie aus der Beschreibung und den nachstehend genannten Zeichnungen. Hierbei ist zu beachten, dass die erwähnten Merkmale jeweils einzeln für sich oder in beliebiger Kombination erfindungswesentlich sein können. Der Schutzbereich der Erfindung wird durch die Ansprüche festgelegt.

### Figurenbeschreibung

Fig. 1 zeigt in einer Blockstruktur die physikalischen Umwandlungsprozesse, die während des Betriebs einer elektromagnetischen Federdruckbremse ablaufen.
Fig. 2 zeigt die gemessenen Zustandsgrößen Strom (I) und Spannung (U) beim Einschalten (Lüften) einer elektromagnetischen Federdruckbremse mit einer Gleichspannung.
Fig. 3 zeigt die gemessenen Zustandsgrößen Strom (I) und Spannung (U) beim Abschalten (Abfallen) einer elektromagnetischen Federdruckbremse mit Freilaufdiode.
Fig. 4a zeigt den Verlauf der Spannung, des Stroms beim Einschalten einer Federdruckbremse mit einer pulsierenden Gleichspannung.
Fig. 4b zeigt den Verlauf der Induktivität und den Verlauf des synchronisierten gleitenden Mittelwerts des Stroms beim Einschalten der Federdruckbremse.
Fig. 4c zeigt den Verlauf der Induktivitätsänderung (dL/dt) und das für die Bewegung der Ankerscheibe kennzeichnende lokale Maximum im Verlauf der Änderung der Induktivität (dL / dt).

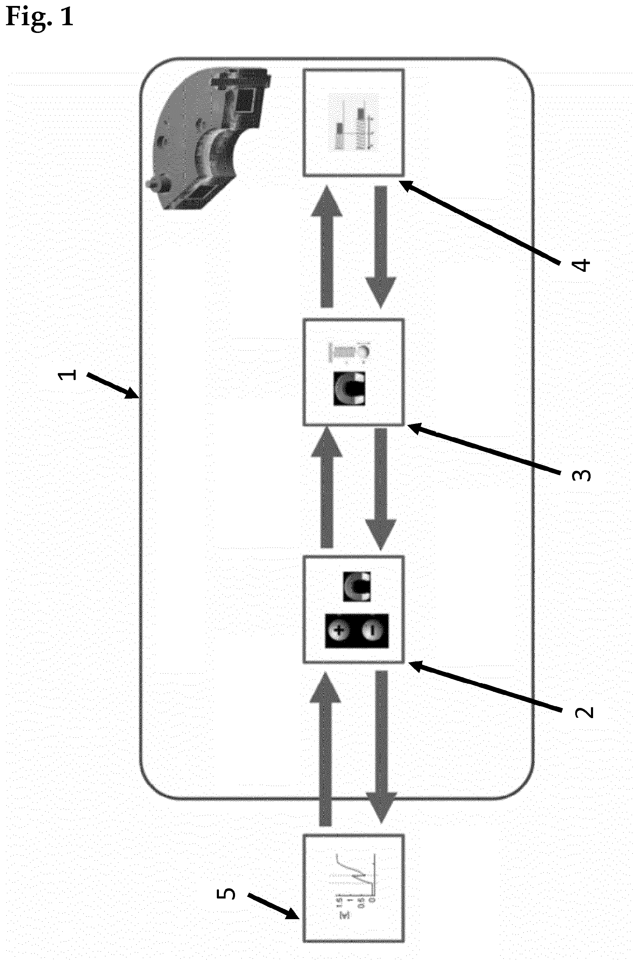

In Fig. 1 wird die mindestens eine elektromagnetische Federdruckbremse als Blockstruktur (1) dargestellt, wobei die Bewegung der Ankerscheibe in der Federdruckbremse als Ablauf von verschiedenen physikalischen Umwandlungsprozessen (2, 3, 4) der Energie beschrieben werden kann. Die genannten physikalischen Umwandlungsprozesse (2, 3, 4) werden im Weiteren genauer ausgeführt und werden in einem Überwachungsmodul als modellbasierte Beschreibung der Ankerscheibenbewegung in der Federdruckbremse hinterlegt.

Die zugeführte elektrische Energie (5) in Form von Gleichspannung oder pulsierender Gleichspannung aus einer elektrischen Energiequelle wird im Betrieb der Federdruckbremse mehreren energetischen Umwandlungsprozessen ausgesetzt. Die Bremse als elektromagnetischer Aktor ist hierbei zu Beginn als elektro-magnetischer Energiewandler (2) beschreibbar. Die elektrische Energie erfährt eine Umwandlung von elektrischer Energie in magnetische Energie (3) und gleichzeitig eine Umwandlung von potentieller Energie in kinetische Energie (4). Hierbei wirkt sich die Umwandlung von potentieller Energie in kinetischer Energie im elektromagnetischen Aktor durch eine Bewegung (Lüften) der Ankerscheibe zum Spulenträger hin aus. Gleichzeitig mit dem Lüften der Ankerscheibe finden weitere Energieumwandlungen statt. Bei der Bewegung der Ankerscheibe wird die kinetische Energie in potentielle Energie umgewandelt, wobei diese Umwandlung mit dem Erreichen der geöffneten Position der Ankerscheibe endet. Gleichzeitig erfolgt eine magneto-mechanische Energie-Umwandlung (3), sodass im letzten Umwandlungsschritt die ursprünglich elektrische Energie im Masse Feder-System der Federdruckbremse gespeichert ist. Beim Schließen der Bremse, also der Bewegung der Ankerscheibe von geöffneter zur geschlossenen Position finden wiederum die beschriebenen physikalischen Umwandlungsprozesse statt. Diese physikalischen Umwandlungsprozesse sind hierbei nicht rückwirkungsfrei und bilden sich in der modellbasierten Beschreibung der Ankerscheibenbewegung ab. Die modellbasierte Beschreibung umfasst vordefinierte Werte die der Bewegung der Ankerscheibe in der Federdruckbremse entsprechen.

So sind in der modellbasierten Beschreibung die Werte und der Verlauf von Zustandsgrößen wie Strom (I) oder Spannung (U) oder aus den Zustandsgrößen abgeleiteten Größen wie insbesondere Induktivität, Änderung der Induktivität oder der induzierten Spannung enthalten. Die verschiedenen vordefinierten Werte/ Verläufe aus der modellbasierten Beschreibung der Ankerscheibenbewegung in einer Federdruckbremse stehen in Verbindung mit verschiedenen Betriebszuständen einer elektromagnetischen Federdruckbremse.

Im Folgenden werden verschiedene Betriebszustände einer Federdruckbremse beschrieben. Zu Beginn des Betriebs bzw. zum Öffnen einer elektromagnetischen Federdruckbremse wird diese eingeschaltet, d.h. mit einer Spannung (pulsierende Gleich- oder Gleichspannung) versorgt. In Folge einer ausreichenden Spannungsversorgung bewegt sich die Ankerscheibe von einer geschlossenen (abgefallenen) Position in eine geöffnete (gelüftete) Position. Die Federdruckbremse befindet sich dann in einem geöffneten Betriebszustand. Zum Ende des Betriebs bzw. beim Schließen (Bremsen) einer elektromagnetischen Federdruckbremse wird die Spannungsversorgung unterbrochen, d.h. die Federdruckbremse wird nicht oder nicht ausreichend mit einer Spannung (Wechsel- oder Gleichspannung) versorgt. In Folge einer fehlenden oder nicht ausreichenden Spannungsversorgung bewegt sich die Ankerscheibe von der geöffneten Position in die geschlossene Position. Die Federdruckbremse befindet sich dann in einem geschlossenen Betriebszustand. Darüber hinaus kann die Federdruckbremse insbesondere bei gedämpften Federdruckbremsen den Betriebszustand des teilweisen Absenkens umfassen. Hierbei wird die Ankerscheibe soweit mit einer Spannung versorgt, dass sich die Ankerscheibe innerhalb der Federdruckbremse langsam zwischen der geöffneten und der geschlossen Position bewegt. Je nach Versorgung mit Spannung erfolgt eine langsam ansteigende oder abfallende Bewegung der Ankerscheibe.

In einem Überwachungsmodul ist die modellbasierte Beschreibung der Bewegung der Ankerscheibe in Verbindung mit den möglichen Betriebszuständen der Federdruckbremse hinterlegt. Das Überwachungsmodul umfasst mindestens ein Halbleiterbauelement, insbesondere einen Mikroprozessor und mindestens ein Strommessgerät und / oder ein Spannungsmessgerät.

Durch ein Ansteuerungsmodul, welches mit der mindestens einen Federdruckbremse und dem Überwachungsmodul verbunden ist, wird der Federdruckbremse ein Betriebszustand vorgegeben und mit der dem Betriebszustand entsprechenden Spannung versorgt.

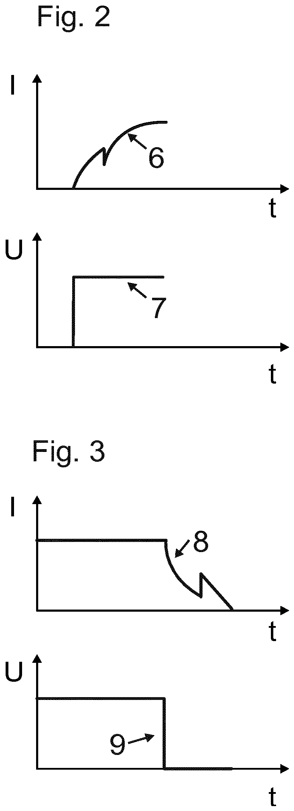

Fig. 2. zeigt einen beispielhaften Strom- (6) und Spannungsverlauf (7) beim Einschalten einer elektromagnetischen Federdruckbremse mit einer Gleichspannung. Hierbei wird die Federdruckbremse über ein Ansteuerungsmodul mit einer Spannung angesteuert und ein zu erreichender Betriebszustand vorgegeben, in diesem Fall ein offener Betriebszustand. In der Folge des Anlegens einer passenden Gleichspannung an die mindestens eine Federdruckbremse baut sich der Strom entsprechend einer exponentiellen Funktion auf. Sobald die oben beschriebenen physikalischen Umwandlungsprozesse der elektrischen Energie soweit fortgeschritten sind, dass sich die Ankerscheibe zum Spulenträger hin bewegt, bildet sich diese Bewegung auch insbesondere in der Zustandsgröße Strom (I) ab. Wie in Fig. 2 dargestellt, bewirkt die Bewegung der Ankerscheibe im Verlauf der Zustandsgrößen Strom (I) einen charakteristischen Abfall. Im Anschluss an diesen charakteristischen Abfall steigt der Strom während der Bewegung der Ankerscheibe wieder der exponentiellen Funktion des induktiven Einschaltvorgangs folgend an, bis er nach dem Erreichen des geöffneten Betriebszustands einen konstanten Stromwert erreicht.

Zur Überwachung des vorgegebenen offenen Betriebszustandes der elektromagnetischen Federdruckbremse ist vorgesehen, dass das Überwachungsmodul mit Hilfe des im Überwachungsmodul enthaltenen Strommessgeräts und/oder Spannungsmessgeräts die an der Federdruckbremse abfallenden Zustandsgrößen Strom (I) und/oder Spannung (U) misst. In diesem Beispiel vergleicht das Überwachungsmodul im Anschluss daran die gemessene Zustandsgröße Strom (I) und / oder Spannung (U) oder die aus der gemessenen Zustandsgröße hergeleitete Größe mit einem vordefinierten Wert/Verlauf. Der vordefinierte Wert/Verlauf für den vom Ansteuerungsmodul vorgegebenen Betriebszustand ist aus der oben beschriebenen modellbasierten Beschreibung der Ankerscheibenbewegung entnommen und im Überwachungsmodul hinterlegt. In Abhängigkeit vom Ergebnis dieses Vergleichs gibt das Überwachungsmodul ein Zustandssignal aus. Das Zustandssignal zeigt hierbei an, ob der vorgegebene Betriebszustand erreicht worden ist oder nicht. Hierbei kann die aus der gemessenen Zustandsgröße hergeleitete Größe insbesondere ein synchronisierter gleitender Mittelwert der gemessenen Zustandsgröße Strom (I) und/oder Spannung (U) sein. Der synchronisierte gleitende Mittelwert bedeutet in diesem Zusammenhang, dass die Länge des gleitenden Mittelwertes der gemessenen Strom- und Spannungswerte auf ein ganzzahliges Vielfaches der vor Ort gängigen halben Periodendauer der Netzfrequenz der Eingangsspannung festgelegt und synchronisiert wird. Insbesondere werden die gleitenden Mittelwerte auf die gängigen Netzfrequenzen 50 Hz oder 60 Hz synchronisiert. Darüber hinaus können alternativ gleichwertige Filterverfahren höherer Ordnung statt des synchronisierten gleitenden Mittelwertes angewendet werden.

Ferner ist erfindungsgemäß vorgesehen, dass zur Überwachung des Betriebszustandes der elektromagnetischen Federdruckbremse das Überwachungsmodul mit Hilfe des im Überwachungsmodul enthaltenen Strommessgeräts und / oder Spannungsmessgeräts die an der Federdruckbremse abfallenden Zustandsgrößen Strom (I) und / oder Spannung (U) misst. Aus den gemessenen Zustandsgrößen und dem Widerstand (Rs) der Spule oder aus der hergeleiteten Größe und dem Widerstand (Rs) wird eine weitere Zustandsgröße berechnet. Diese weitere Zustandsgröße kann insbesondere die Änderung der Induktivität an der Spule der Federdruckbremse sein. Im Anschluss daran vergleicht das Überwachungsmodul die weitere Zustandsgröße mit dem im Überwachungsmodul vordefinierten Wert/ Verlauf dieser weiteren Zustandsgröße, der für den vom Ansteuerungsmodul vorgegebenen Betriebszustand im Überwachungsmodul aus der modellbasierten Beschreibung der Bewegung der Ankerscheibe in der Federdruckbremse hinterlegt ist. In Abhängigkeit vom Ergebnis dieses Vergleichs gibt das Überwachungsmodul ein Zustandssignal aus. Hierbei kann die zur Berechnung verwendete hergeleitete Größe, die aus der gemessenen Zustandsgröße hergeleitet wurde, insbesondere der synchronisierte gleitende Mittelwert der gemessenen Zustandsgröße Strom (I) und / oder Spannung (U) sein.

Fig. 3 zeigt einen beispielhaften Strom- (8) und Spannungsverlauf (9) beim Abschalten der elektromagnetischen Federdruckbremse mit Freilaufdiode. Hierbei wird die Versorgung der Federdruckbremse mit einer Gleichspannung über ein Ansteuerungsmodul unterbrochen und ein zu erreichender Betriebszustand vorgegeben, in diesem Fall der geschlossene Betriebszustand. Nach Abschalten der Spannung sinkt der Strom mit einem exponentiell abfallenden Verlauf. Sobald die oben beschriebenen physikalischen Umwandlungsprozesse der elektrischen Energie soweit fortgeschritten sind, dass sich die Ankerscheibe von der gelüfteten Position in Richtung der geschlossenen Position bewegt, verändern sich auch die physikalischen Gegebenheiten. Diese Änderung der physikalischen Gegebenheiten bildet sich im Verlauf des Stromverlaufs durch einen charakteristischen Sprung in der Zustandsgröße Strom (I) ab. Im Anschluss an den Sprung der Zustandsgröße Strom (I) fällt diese wieder exponentiell ab bis die Ankerscheibe die geschlossene Position erreicht und die Zustandsgröße Strom (I) auf Null abfällt.

Zur Überwachung des vorgegebenen geschlossenen Betriebszustandes der elektromagnetischen Federdruckbremse ist vorgesehen, dass das Überwachungsmodul mit Hilfe des im Überwachungsmodul enthaltenen Strommessgeräts und / oder Spannungsmessgeräts die an der Federdruckbremse abfallenden Zustandsgrößen Strom (I) und / oder Spannung (U) misst. Im Anschluss daran vergleicht das Überwachungsmodul die gemessene Zustandsgröße Strom (I) und / oder Spannung (U) oder die aus der gemessenen Zustandsgröße hergeleitete Größe mit dem vordefinierten Wert/ Verlauf, der für den vom Ansteuerungsmodul vorgegebenen Betriebszustand im Überwachungsmodul hinterlegt ist. In Abhängigkeit vom Ergebnis dieses Vergleichs gibt das Überwachungsmodul ein Zustandssignal aus. Hierbei kann die aus der gemessenen Zustandsgröße hergeleitete Größe insbesondere der synchronisierte gleitende Mittelwert der gemessenen Zustandsgröße Strom (I) und / oder Spannung (U) sein. Darüber hinaus kann der vorgegebene Betriebszustand auch anhand der weiteren Zustandsgröße, Änderung der Induktivität (dL / dt) bestimmt werden.

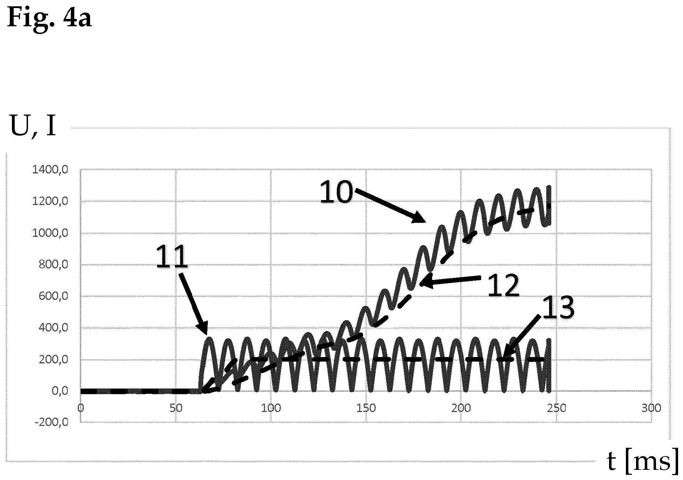

Fig. 4a zeigt einen beispielhaften Strom- (10) und Spannungsverlauf (11) beim Einschalten einer elektromagnetischen Federdruckbremse an (Netz-) Wechselspannung mit einem Brückengleichrichter. Hierbei zeigt der Spannungsverlauf (11) eine pulsierende Gleichspannung und der Stromverlauf (10) zeigt einen ansteigenden Verlauf, wobei dieser Verlauf von einer Wellenstruktur überlagert wird. Darüber hinaus ist als hergeleitete Größe der synchronisierte gleitende Mittelwert für die gemessenen Zustandsgrößen Strom (12) und Spannung (13) dargestellt. Wie auch bei verschiedenen anderen Bremsengruppen, die sich insbesondere in der Nennspannung unterscheiden, ist in diesem Beispiel die Bewegung der Ankerscheibe anhand der Stromverläufe (10, 12) nicht erkennbar.

Aus diesem Grund wird erfindungsgemäß vorgeschlagen, dass aus den gemessenen Größen Strom (I) und / oder Spannung (U) bzw. aus den daraus hergeleiteten synchronisierten gleitenden Mittelwerten in Verbindung mit einer für die jeweilige Bremsengruppe bekannten Widerstandswert der Spule (Rs) den Verlauf der Induktivität (L) zu berechnen. Vorzugsweise kann zur Berechnung der Induktivität (L) der verkettete magnetische Fluss Ψ = Σ U_{IND.} bestimmt werden. Die Bremse ist hierbei als Reihenschaltung aus Induktivität und ohmschen Widerstand zu betrachten, wobei die durch die angelegte Spannung U induzierte Spannung U_{IND} durch den am ohmschen Widerstand der Spule abfallenden Spannungswert U_{Rs} reduziert wird, sodass die induzierte Spannung U_{IND.} = U - U_{Rs} ist. Hierbei ist die abfallende Spannung U_{Rs} = I · R_{Rs}, wobei R der Widerstandswert der Spule (Rs) ist. Die Induktivität L ergibt sich dann aus dem Zusammenhang L = Ψ/I.

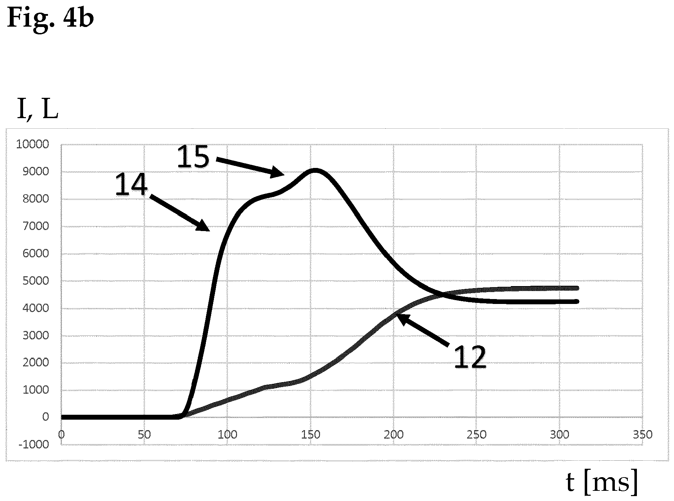

In Figur 4b ist der Verlauf der Induktivität (14) beim Einschalten der Federdruckbremse mit pulsierender Gleichspannung dargestellt, wobei die Induktivität (L) aus dem synchronisierten gleitenden Mittelwert von Strom (I) und/ oder Spannung (U) und aus dem Widerstandswert (Rs) der Spule bestimmt wird. Direkt nach dem Einschalten nimmt die Induktivität (L) zunächst stark zu, wobei die Induktivität danach nahezu ein Plateau erreicht. Während dieses Plateaus schreiten die oben beschriebenen physikalischen Umwandlungsprozesse der elektrischen Energie so weit voran, dass die Bewegung der Ankerscheibe vom geschlossenen zum geöffneten Zustand im Verlauf der Induktivität anhand der erneuten Zunahme der Induktivität (15) erkennbar ist. Im Anschluss an diesen erneuten Anstieg der Induktivität nimmt die Induktivität (15) im weiteren Verlauf auf einen konstanten Wert ab.

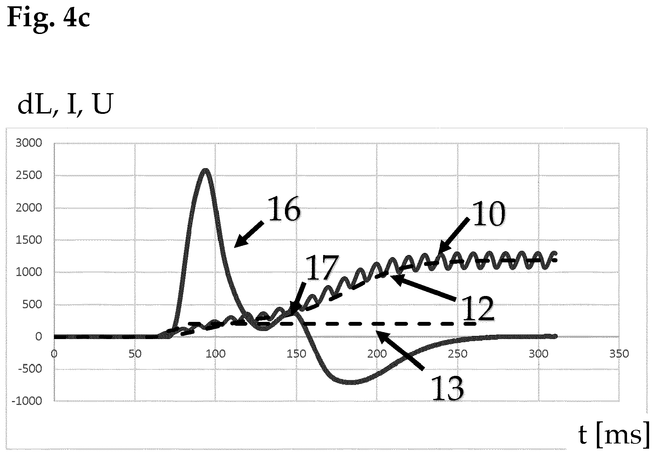

In Figur 4c ist erfindungsgemäß die Änderung der Induktivität (dL/dt) während des Einschaltvorgangs der Federdruckbremse dargestellt. In der Folge des Anlegens der (Netz-) Wechselspannung steigt die Änderung der Induktivität (dL/dt) schnell auf einen maximal positiven Wert (globales Maximum), um im Anschluss daran wieder abzufallen. Während dieses Abfalls schreiten die oben beschriebenen physikalischen Umwandlungsprozesse der elektrischen Energie so weit voran, dass sich die Ankerscheibe vom Spulenträger wegbewegt. Diese Bewegung der Ankerscheibe bildet sich im Verlauf der Änderung der Induktivität (dL/dt) (16) durch einen erneuten Anstieg auf ein lokales Maximum (17) ab. Dieses lokale Maximum (17) beschreibt die Bewegung der Ankerscheibe von der geschlossenen in die geöffnete Position. Hierbei definiert der Wendepunkt von abfallender Änderung der Induktivität zu zunehmender Änderung der Induktivität den Beginn der Bewegung der Ankerscheibe. Im Anschluss daran fällt die Änderung der Induktivität während der Bewegung der Ankerscheibe ab um im Anschluss auf einem konstanten Wertzu verbleiben. Dies ist entsprechend auch für die Ansteuerung einer Federdruckbremse mit einer Gleichspannung anwendbar.

Mehrere Bremsen verschiedener Größe können zu einer Bremsengruppe zusammengefasst werden, die mit einem Widerstandswert (Rs) arbeiten. Hierbei wird die Wahl des Widerstandswerts (Rs) für die Bestimmung des Betriebszustandes durch den kleinsten und größten Widerstandswert dieser Bremsengruppe bestimmt. Der gewählte Widerstandswert (Rs) ist kleiner als der kleinste Widerstand innerhalb einer Bremsengruppe. Der Grund hierfür ist, dass bei kleinerem Widerstand die Steigung der Induktivität vergrößert wird. Bei kleinen Bremsen, die einen größeren Widerstand besitzen, wird somit der kleinere Peak in der Änderung der Induktivität (dL / dt) vergrößert. Vorteilhaft an diesem Widerstandswert (Rs) ist, dass alle Bremsen dieser Gruppe mit den gleichen Grenzwerten detektiert werden können. Für einen Widerstandswert (Rs) einer Bremsengruppe können insbesondere nachfolgende Grenzwerte für alle Bremsen einer Bremsengruppe verwendet werden. Diese Grenzwerte sind, ein Grenzwert für die Höhe des lokalen Maximums (16), ein Grenzwert für den durch die Bremse fließenden Strom und ein Grenzwert des Induktivitätsunterschieds zwischen der Induktivität vor und nach der Bewegung der Ankerscheibe.

Für die Charakterisierung einer Bremsengruppe hat sich insbesondere die Nennspannung der Bremsen als vorteilhaft erwiesen, da innerhalb einer Bremsengruppe der Widerstand bei der größten Bremse am kleinsten ist, und mit abnehmender Bremsengröße der Widerstand größer wird. Vorzugsweise hat sich für eine Bremsengruppe mit 104V Nennspannung ein gewählter Widerstandswert von 6 Ω als vorteilhaft für die Bestimmung des Betriebszustands erwiesen. Dieser Widerstandswert ist kleiner als der kleinste Widerstandswert der kleinsten Bremse, wobei der Widerstandswert für die größte Bremse (160W) bei 67 Ω liegt. Der Widerstandswert (Rs) ist dabei so gewählt, dass keine Fehldetektion durch Störeinflüsse wie insbesondere, Strom, oder Spannungsschwankungen bzw. der Elektromagnetische Verträglichkeit (EMV) bei der kleinsten Bremse dieser Bremsengruppe ausgelöst werden, da durch Störeinflüsse ausgelöste Peaks nicht zu sehr verstärkt werden.

In einer Ausführungsform der Erfindung wird ein Widerstandswert für die Spule (Rs) der jeweiligen Bremsengruppe für die Berechnung der hergeleiteten Zustandsgröße im Überwachungsmodul der Bremse fest hinterlegt. In einer alternativen Ausführungsform wird der Widerstandswert für die Berechnung der hergeleiteten Zustandsgröße nach jeder Messung neu bestimmt und im Überwachungsmodul neu abgespeichert und bei der darauffolgenden Bestimmung des Betriebszustandes verwendet.

Zur Überwachung des Betriebszustandes der elektromagnetischen Federdruckbremse ist erfindungsgemäß vorgesehen, dass das Überwachungsmodul mit Hilfe des im Überwachungsmodul enthaltenen Strommessgeräts und/oder Spannungsmessgeräts die an der Federdruckbremse abfallenden Zustandsgrößen Strom (I) und/oder Spannung (U) misst. Im vorliegenden Beispiel wird aus den gemessen Zustandsgrößen Strom (I) und Spannung (U) der synchronisierte geleitende Mittelwert gebildet und aus dem synchronisierten geleitenden Mittelwert und aus dem Widerstandwert der Spule wird eine weitere Zustandsgröße berechnet. Erfindungsgemäß wird als weitere Zustandsgröße die Änderung der Induktivität berechnet. Im Anschluss daran vergleicht das Überwachungsmodul den berechneten Wert/Verlauf der Induktivitätsänderung mit dem vordefinierten Wert/Verlauf dieser weiteren Zustandsgröße. Der vordefinierte Wert/Verlauf für den vom Ansteuerungsmodul vorgegebenen Betriebszustand ist aus der oben beschriebenen modellbasierten Beschreibung der Ankerscheibenbewegung entnommen und im Überwachungsmodul hinterlegt. In Abhängigkeit vom Ergebnis dieses Vergleichs gibt das Überwachungsmodul ein Zustandssignal aus. Die Berechnung des synchronisierten gleitenden Mittelwerts als hergeleitete Größe zur Berechnung der weiteren Zustandsgröße Induktivitätsänderung ist vorteilhaft, da bei einem Betrieb mit pulsierender Gleichspannung der charakteristische Verlauf der gemessenen Zustandsgröße Strom, die die Bewegung der Ankerscheibe anzeigt, aufgrund des bei pulsierender Gleichspannung vorhanden niedrigen Signal-zu-Rausch Verhältnisses schwierig sichtbar ist. Durch Verwendung des synchronisierten gleitenden Mittelwerts aus den gemessenen Zustandsgrößen ist es möglich, die weitere Zustandsgröße Induktivitätsänderung zu bestimmen und anhand dieser die Bewegung der Ankerscheibe zu überwachen.

Bei der Ansteuerung der Federdruckbremse mit einer pulsierenden Gleichspannung kann diese über eine Gleichrichterschaltung, insbesondere eine Gleichrichterschaltung mit einem gesteuerten oder ungesteuerten Brückengleichrichter / Einweggleichrichter erfolgen.

Im Falle einer Übereinstimmung der gemessenen Zustandsgröße oder einer berechneten weiteren Zustandsgröße mit dem im Überwachungsmodul hinterlegten Wert/ Verlauf für den vom Ansteuerungsmodul vorgegeben Betriebszustand kann das Überwachungsmodul ein Zustandssignal an das Ansteuerungssignal übergeben. Dem Ansteuerungsmodul wird damit angezeigt, dass der vorgegebene Betriebszustand erreicht ist. Alternativ kann bei einer fehlenden Übereinstimmung der gemessenen Zustandsgröße oder einer berechneten weiteren Zustandsgröße mit dem im Überwachungsmodul hinterlegten Wert/ Verlauf ein Zustandssignal an das Ansteuerungsmodul übergeben werden. In diesem Fall wird dem Ansteuerungsmodul damit angezeigt, dass der vom Ansteuerungsmodul vorgegebene Betriebszustand nicht erreicht worden ist.

Hierbei kann das Ansteuerungsmodul im Überwachungsmodul enthalten sein, sodass das beim Vergleich sich ergebende Zustandssignal intern zwischen Überwachungsmodul und Ansteuerungsmodul übergeben werden kann. Alternativ kann das Ansteuerungsmodul ein externes Modul sein, sodass das beim Vergleich sich ergebende Zustandssignal an das externe Ansteuerungsmodul übergeben wird.

Eine weitere Alternative sieht vor, dass ein Ansteuerungsmodul im Überwachungsmodul enthalten ist und darüber hinaus noch ein zweites externes Ansteuerungsmodul enthalten ist, und dass das beim Vergleich sich ergebende Zustandssignal sowohl an das interne als auch an das externe Ansteuerungsmodul übergeben wird.

### Bezugszeichenliste

1. Bremse als elektromagnetischer Aktor
2. Elektro-magnetischer Energiewandler
3. Magneto-mechanischer Energiewandler
4. Potentielle und kinetische Energie
5. Energiequelle
6. Stromverlauf - Gleichspannung-Einschalten
7. Spannungsverlauf-Gleichspannung- Einschalten
8. Stromverlauf - Gleichspannung- Ausschalten
9. Spannungsverlauf-Gleichspannung-Ausschalten
10. Stromverlauf-pulsierende Gleichspannung-Einschalten
11. Spannungsverlauf- pulsierende Gleichspannung -Einschalten
12. Synchronisierter gleitender Mittelwert des Stroms
13. Synchronisierter gleitender Mittelwert der Spannung
14. Verlauf der Induktivität
15. Änderung der Induktivität bei Bewegung der Ankerscheibe
16. Verlauf der Änderung der Induktivität mit der Zeit (dL/dt)
17. Lokales Maximum im Verlauf der Änderung der Induktivität (dL/dt)

## Patentansprüche

1. Verfahren zur Überwachung des Betriebszustands mindestens einer elektromagnetischen Federdruckbremse, die mindestens
- eine Spule,
- eine Ankerscheibe
- und einen Spulenträger mit hierauf verteilten Druckfedern umfasst; und
wobei der Federdruckbremse durch ein Ansteuerungsmodul, das die Federdruckbremse mit einer Spannung ansteuert, ein zu erreichender Betriebszustand vorgegeben wird, und zwar durch ein Überwachungsmodul, das mindestens
- ein Halbleiterbauelement,
- ein Strommessgerät und / oder
- ein Spannungsmessgerät umfasst,
**gekennzeichnet durch** die folgenden Schritte:
(i) Messung der Zustandsgröße Strom (I) und / oder Spannung (U) an der elektromagnetischen Federdruckbremse durch das Überwachungsmodul;
(ii) Berechnung einer weiteren Zustandsgröße aus der gemessenen Zustandsgröße Strom (I) und / oder Spannung (U) und aus dem Widerstandswert der Spule (Rs) oder aus einer aus der gemessenen Zustandsgröße Strom (I) und / oder Spannung (U) hergeleiteten Größe und aus dem Widerstandswert der Spule (Rs), wobei die weitere Zustandsgröße die Änderung der Induktivität mit der Zeit (dL / dt) ist;
(iii) Vergleich der weiteren Zustandsgröße mit einem im Überwachungsmodul für den vom Ansteuerungsmodul vorgegebenen Betriebszustand der Federdruckbremse hinterlegten vordefinierten Wert/ Verlauf dieser weiteren Zustandsgröße,
(iv) Ausgabe mindestens eines Zustandssignals in Abhängigkeit vom Ergebnis des Vergleichs im vorherigen Schritt.

2. Verfahren nach Anspruch 1, **dadurch gekennzeichnet, dass** die aus der gemessenen Zustandsgröße hergeleitete Größe der synchronisierte gleitende Mittelwert oder vergleichbare Filterfunktion höherer Ordnung der gemessenen Zustandsgröße Strom (I) und / oder Spannung (U) ist.

3. Verfahren nach Anspruch 1, **dadurch gekennzeichnet, dass** die weitere Zustandsgröße aus dem verkettetem magnetischen Fluß Ψ berechnet wird.

4. Verfahren nach einem der Ansprüche 1 - 3 **dadurch gekennzeichnet, dass** die elektromagnetische Federdruckbremse durch das Ansteuerungsmodul mit einer Gleichspannung angesteuert wird.

5. Verfahren nach einem der Ansprüche 1- 3, **dadurch gekennzeichnet, dass** die elektromagnetische Federdruckbremse durch das Ansteuerungsmodul mit einer pulsierenden Gleichspannung angesteuert wird.

6. Verfahren nach Anspruch 5, **dadurch gekennzeichnet, dass** die Spule in der Federdruckbremse über eine Gleichrichterschaltung mit einer pulsierende Gleichspannung angesteuert wird.

7. Verfahren nach Anspruch 5, **dadurch gekennzeichnet, dass** die Gleichrichterschaltung einen gesteuerten und/ oder ungesteuerten Brückengleichrichter / Einweggleichrichter enthält.

8. Verfahren nach Anspruch 1 **dadurch gekennzeichnet, dass** der Widerstandwert (Rs) der Spule im Überwachungsmodul hinterlegt ist.

9. Verfahren nach Anspruch 1 **dadurch gekennzeichnet, dass** der Widerstandwert (Rs) der Spule nach jeder Messung im Überwachungsmodul gespeichert wird.

10. Verfahren nach einem der vorangegangenen Ansprüche **dadurch gekennzeichnet, dass das** mindestens eine Zustandssignal entweder das Erreichen oder das Nicht-Erreichen des vom Ansteuerungsmodul der Federdruckbremse vorgegebenen Betriebszustands anzeigt.

11. Verfahren nach einem der vorangegangenen Ansprüche, **dadurch gekennzeichnet, dass** die Federdruckbremse eine Freilaufdiode im Gleichstrompfad umfasst.

12. Verfahren nach einem der vorangegangenen Ansprüche, **dadurch gekennzeichnet, dass** die elektromagnetische Federdruckbremse eine gedämpfte oder ungedämpfte elektromagnetische Federdruckbremse ist.

13. Verfahren nach einem der vorangegangenen Ansprüche, **dadurch gekennzeichnet, dass** das Ansteuerungsmodul im Überwachungsmodul enthalten ist und das mindestens eine Zustandssignal an das Ansteuerungsmodul übergeben wird.

14. Verfahren nach einem der Ansprüche 1 -13, **dadurch gekennzeichnet, dass das** mindestens eine Zustandssignal an ein externes Ansteuerungsmodul übergeben wird.

15. Verfahren nach Anspruch 13, **dadurch gekennzeichnet, dass das** mindestens eine Zustandssignal weiterhin an ein im Überwachungsmodul enthaltenes Ansteuerungsmodul übergeben wird.

## Claims

1. A method for monitoring the operating state of at least one electromagnetic spring-loaded brake, which at least comprises
- a coil,
- an armature disc
- and a coil support with compression springs distributed thereon; and
an operating state to be achieved being specified for the spring-loaded brake by a control module, which controls the spring-loaded brake with a voltage, specifically by a monitoring module, which at least comprises
- a semiconductor element,
- an ammeter, and/or
- a voltmeter,
**characterized by** the following steps:
(i) measuring the status variable current (I) and/or voltage (U) at the electromagnetic spring-loaded brake by means of the monitoring module;
(ii) calculating a further status variable from the measured status variable current (I) and/or voltage (U) and from the resistance value of the coil (Rs) or from a variable deduced from the measured status variable current (I) and/or voltage (U) and from the resistance value of the coil (Rs), wherein the further status variable is the change of the inductance over time (dL/dt);
(iii) comparing the further status variable with a predefined value/curve of this further status variable stored in the monitoring module for the operating state of the spring-loaded brake predetermined by the control module;
(iv) outputting at least one status signal as a function of the result of the comparison in the preceding step.

2. The method according to Claim 1, **characterized in that** the variable deduced from the measured status variable is the synchronized moving average or comparable higher order filter function of the measured status variable current (I) and/or voltage (U).

3. The method according to Claim 1, **characterized in that** the further status variable is calculated from the linked magnetic flux Ψ.

4. The method according to one of Claims 1 - 3, **characterized in that** the electromagnetic spring-loaded brake is controlled by the control module with a DC voltage.

5. The method according to one of Claims 1 - 3, **characterized in that** the electromagnetic spring-loaded brake is controlled by the control module with a pulsating DC voltage.

6. The method according to Claim 5, **characterized in that** the coil in the spring-loaded brake is controlled by means of a rectifier circuit with a pulsating DC voltage.

7. The method according to Claim 5, **characterized in that** the rectifier circuit contains a controlled and/or uncontrolled bridge rectifier/half-wave rectifier.

8. The method according to Claim 1, **characterized in that** the resistance value (Rs) of the coil is stored in the monitoring module.

9. The method according to Claim 1, **characterized in that** the resistance value (Rs) of the coil is stored in the monitoring module after every measurement.

10. The method according to one of the preceding claims, **characterized in that** the at least one status signal indicates either the achievement or the non-achievement of the operating state specified by the control module of the spring-loaded brake.

11. The method according to one of the preceding claims, **characterized in that** the spring-loaded brake comprises a flyback diode in the direct current path.

12. The method according to one of the preceding claims, **characterized in that** the electromagnetic spring-loaded brake is a damped or undamped electromagnetic spring-loaded brake.

13. The method according to one of the preceding claims, **characterized in that** the control module is contained in the monitoring module and the at least one status signal is transferred to the control module.

14. The method according to one of Claims 1 - 13, **characterized in that** the at least one status signal is transferred to an external control module.

15. The method according to Claim 13, **characterized in that** the at least one status signal is furthermore transferred to a control module contained in the monitoring module.

## Revendications

1. Procédé de contrôle de l'état de fonctionnement d'au moins un frein électromagnétique à pression par ressorts, qui comprend au moins,
- une bobine,
- un disque d'induit,
- et un support de bobine avec des ressorts de pression répartis dessus et
sachant qu'un état de fonctionnement à atteindre est fixé à l'avance au frein à pression par ressorts par un module de commande, qui active le frein à pression par ressorts avec une tension et précisément par un module de contrôle, qui comprend au moins
- un élément à semi-conducteurs,
- un appareil de mesure de courant et/ou
- un appareil de mesure de tension,
**caractérisé par** les étapes suivantes :
(i) mesure de la valeur d'état Courant (I) et/ou Tension (U) sur le frein électromagnétique à pression par ressorts par le module de contrôle,
(ii) calcul d'une autre valeur d'état à partir de la valeur d'état mesurée Courant (I) et/ou Tension (U) et à partir de la valeur de résistance de la bobine (Rs) ou à partir d'une valeur déduite de la valeur d'état mesurée Courant (I) et/ou Tension (U) ou à partir de la valeur de résistance de la bobine (Rs), sachant que l'autre valeur d'état est la variation de l'inductance avec le temps (dL/dt),
(iii) comparaison de l'autre valeur d'état avec une valeur/un profil prédéfini de cette autre valeur d'état, enregistré dans le module de contrôle pour l'état de fonctionnement prédéfini par le module de commande du frein à pression par ressorts
(iv) émission d'au moins un signal d'état en fonction du résultat de la comparaison dans l'étape précédente.

2. Procédé selon la revendication 1, **caractérisé en ce que** la valeur déduite de la valeur d'état mesurée est la valeur moyenne mobile synchronisée ou la fonction de filtre comparable d'ordre supérieur de la valeur d'état mesurée Courant (I) et/ou Tension (U).

3. Procédé selon la revendication 1, **caractérisé en ce que** l'autre valeur d'état est calculée à partir du flux magnétique **Ψ** enchaîné.

4. Procédé selon l'une quelconque des revendications 1 - 3, **caractérisé en ce que** le frein électromagnétique à pression par ressorts est activé par le module de commande avec une tension continue.

5. Procédé selon l'une quelconque des revendications 1 - 3, **caractérisé en ce que le** frein électromagnétique à pression par ressorts est activé par le module de commande avec une tension continue pulsée.

6. Procédé selon la revendication 5, **caractérisé en ce que** la bobine dans le frein à pression par ressorts est activée par le biais d'un montage de redresseur avec une tension continue pulsée.

7. Procédé selon la revendication 5, **caractérisé en ce que** le montage de redresseur contient un redresseur en pont/redresseur unidirectionnel piloté et/ou non piloté.

8. Procédé selon la revendication 1, **caractérisé en ce que** la valeur de résistance (Rs) de la bobine est enregistrée dans le module de contrôle.

9. Procédé selon la revendication 1, **caractérisé en ce que** la valeur de résistance (Rs) de la bobine est mémorisée dans le module de contrôle après chaque mesure.

10. Procédé selon l'une quelconque des revendications précédentes, **caractérisé en ce qu'**au moins un signal d'état indique soit l'atteinte ou la non-atteinte de l'état de fonctionnement prédéfini par le module de commande du frein à pression par ressorts.

11. Procédé selon l'une quelconque des revendications précédentes, **caractérisé en ce que** le frein à pression par ressorts comprend une diode de roue libre dans le chemin du courant continu.

12. Procédé selon l'une quelconque des revendications précédentes, **caractérisé en ce que** le frein électromagnétique à pression par ressorts est un frein électromagnétique à pression par ressorts amorti ou non amorti.

13. Procédé selon l'une quelconque des revendications précédentes, **caractérisé en ce que** le module de commande est contenu dans le module de contrôle et au moins un signal d'état est transmis au module de commande.

14. Procédé selon l'une quelconque des revendications 1 - 13, **caractérisé en ce qu'**au moins un signal d'état est transmis à un module de commande externe.

15. Procédé selon la revendication 13, **caractérisé en ce qu'**au moins un signal d'état est transmis de plus à un module de commande contenu dans le module de contrôle.
